# EUROPEAN PATENT APPLICATION

(11) **EP 4 685 737 A1**
(43) Date of publication of application: **28.01.2026**
(21) Application number: 25152635.6
(22) Date of filing: 17.01.2025
(51) Int. Cl.: G06T 7/00

(54) **BATTERY WELDING DEFECT DETECTION SYSTEM, METHOD, DEVICE, AND STORAGE MEDIUM**

(30) Priority: 24.07.2024 CN 202410999966
(71) Applicant: Shenzhen Bak Power Battery Co., Ltd., Shenzhen, Guangdong 518000 (CN)
(72) Inventor: XI, Hewen, SHENZHEN, GUANGDONG, 518000 (CN); ZHOU, Junyang, SHENZHEN, GUANGDONG, 518000 (CN); WU, Weijiang, SHENZHEN, GUANGDONG, 518000 (CN); LI, Fengmei, SHENZHEN, GUANGDONG, 518000 (CN)
(74) Representative: Gamba, Alessandro

(57) **Abstract**

The present invention provides a battery welding defect detection system, method, device, and storage medium, wherein the system includes: the acquisition processing module, configured to acquire the welding image of the battery welding object and pre-process the welding image to obtain the processed welding image; the defect statistic module, configured to classify and count the processed welding image based on the target detection model to obtain the plurality of battery candidate frames; and the detection analysis module, configured to obtain the corresponding battery detection result according to the preset threshold and the battery candidate frames by the target detection model. The present invention performs the defect defection on the processed battery welding image based on the target detection model, thereby significantly improving the detection efficiency and the accuracy of the results, and at the same time effectively reducing the production cost.

## Description

### TECHNICAL FIELD

The present invention relates to the technical field of the battery, and specifically to a battery welding defect detection system, a method, a device, and a storage medium.

### BACKGROUND ART

In the battery manufacturing industry, the welding defect detection of the large square battery plays a role in connecting the raw materials for production and the manufacturing processes of complete batteries. The welding quality of the large square battery directly affects the safety and performance of the finished battery. However, it is common to use traditional welding defect detection at present, which mainly relies on microscope to check one by one manually. The manual detection consumes a lot of time, wherein the inspector needs to check welding joints one by one carefully, which seriously restricts the production efficiency; and the inspector is easily fatigued after a long-time observation, which in turn affects the detection accuracy, so that the consistency and reliability of the detection result cannot be ensured. Additionally, the checking ability of the human eyes is limited for fine cracks and welding points interfered by light, which is difficult to meet the requirements of the industrial-level detection.

As a result, the prior welding defect detection techniques have obvious shortcomings in efficiency, accuracy, and cost control.

### SUMMARY

The object of embodiments of the present invention is to provide a battery welding defect detection system, a method, a device, and a storage medium to solve problems of low efficiency, low accuracy, and high cost in the current battery welding defect detection.

In a first aspect, the present invention provides a battery welding defect detection system, including:
an acquisition processing module, configured to acquire a welding image of a battery welding object and pre-process the welding image to obtain a processed welding image;
a defect statistic module, configured to classify and count the processed welding image based on a target detection model to obtain a plurality of battery candidate frames; and
a detection analysis module, configured to obtain a corresponding battery detection result according to a preset threshold and the battery candidate frames by the target detection model.

In an optional embodiment, it further includes:
an acquiring module, configured to acquire a battery welding image training set for training, a battery welding image verification set, and a battery welding image test set;
a construction module, configured to construct an initial target detection model according to the welding image training set based on a preset deep learning model; and
a training module, configured to train the initial target detection model according to the welding image verification set and the welding image test set, so as to obtain the target detection model.

In an optional embodiment, the acquisition processing module includes:
a processing unit, configured to process the welding image by clipping, denoising, enhancement, and standardization by using a preset image processing algorithm, so as to obtain the processed welding image.

In an optional embodiment, the defect statistic module includes:
a candidate unit, configured to generate a plurality of candidate frames of a corresponding number and size according to the processed welding image and a preset size by a sliding window strategy; and
a classification unit, configured to classify each of the candidate frames by the target detection model, so as to obtain a plurality of types of candidate frames.

In an optional embodiment, the detection analysis module includes:
a detection unit, configured to detect each of the candidate frames by the target detection model to obtain a corresponding image feature, and to analyze the image feature to obtain a corresponding defect type and a defect position;
a regression unit, configured to perform a regression analysis according to the defect type and the defect position by a preset function, so as to obtain a corresponding defect probability distribution; and
an analysis unit, configured to analyze all candidate frames based on the preset threshold and the defect probability distribution, so as to obtain the battery detection result.

In an optional embodiment, it further includes:
a result output module, configured to display corresponding defect information according to the defect type, the defect position, and the battery detection result.

In an optional embodiment, it further includes: a data update module, configured to bind the battery detection result to cell data of a corresponding battery and update to a preset database.

In a second aspect, the present invention provides a battery welding defect detection method, including:
acquiring a welding image of a battery welding object and pre-processing the welding image to obtain a processed welding image;
classifying and counting the processed welding image based on a target detection model to obtain a plurality of battery candidate frames; and
obtaining a corresponding battery detection result according to a preset threshold and the battery candidate frames by the target detection model.

In a third aspect, the present invention provides an electronic device, including a memory, a processor, and a computer program stored in the memory and operable in the processor, wherein the battery welding defect detection method as described in the foregoing embodiments is realized when the processor executes the computer program.

In a fourth aspect, the present invention provides a computer readable storage medium, and the storage medium stores a computer program stored thereon, wherein the battery welding defect detection method as described in the foregoing embodiments is executed when the computer program is executed by the processor.

The present invention has the following effects by using the above technical solutions.

The present invention provides a battery welding defect detection system, method, device, and storage medium, wherein the system includes: the acquisition processing module, configured to acquire the welding image of the battery welding object and pre-process the welding image to obtain the processed welding image; the defect statistic module, configured to classify and count the processed welding image based on the target detection model to obtain the plurality of battery candidate frames; and the detection analysis module, configured to obtain the corresponding battery detection result according to the preset threshold and the battery candidate frames by the target detection model. The present invention performs the defect defection on the processed battery welding image based on the target detection model, thereby significantly improving the detection efficiency and the accuracy of the results, and at the same time effectively reducing the production cost.

### BRIEF DESCRIPTION OF DRAWINGS

In order to more clearly illustrate the technical solutions in the embodiments of the present invention, the drawings to be used in the embodiments of the present invention will be briefly introduced below. It is to be understood that the following drawings only show certain embodiments of the present invention, and therefore should not be regarded as a limitation of the scope. For persons of ordinary skill in the field, other relevant drawings can be obtained according to these drawings without inventive efforts.
FIG. 1 shows one schematic structure diagram of a battery welding defect detection system provided by an embodiment of the present invention;
FIG. 2 shows another schematic structure diagram of a battery welding defect detection system provided by an embodiment of the present invention;
FIG. 3 shows another schematic structure diagram of a battery welding defect detection system provided by an embodiment of the present invention;
FIG. 4 shows another schematic structure diagram of a battery welding defect detection system provided by an embodiment of the present invention;
FIG. 5 shows another schematic structure diagram of a battery welding defect detection system provided by an embodiment of the present invention; and
FIG. 6 shows a schematic flow diagram of a battery welding defect detection method provided by an embodiment of the present invention.

Reference numbers: 10-battery welding defect detection system; 100-acquisition processing module; 200-defect statistic module; 300-detection analysis module; 101-processing unit; 201-candidate unit; 202-classification unit; 301-detection unit; 302-regression unit; 303-analysis unit; 501-acquiring module; 502-construction module; and 503-training module.

### DETAILED DESCRIPTION OF EMBODIMENTS

The technical solutions in the embodiments of the present invention will be described below in conjunction with the drawings in the embodiments of the present invention.

The components in the embodiments of the present invention generally described and shown in the drawings herein can be arranged and designed in multiple different configurations. Therefore, the following detailed description of embodiments of the present invention provided in the drawings is not intended to limit the scope of the present invention for which protection is claimed, but rather represents only selected embodiments of the present invention. Based on the embodiments in the present invention, all other embodiments obtained by a person skilled in the art without inventive efforts fall within the scope of protection of the present invention.

In the following text, the terms "include", "have," and their cognates used in various embodiments of the present invention, are intended only to represent a particular feature, number, step, operation, element, component, or combination of the foregoing, and should not be understood as precluding the existence of one or more other features, numbers, steps, operations, elements, components, or combinations of the foregoing, or improving the possibility of one or more other features, numbers, steps, operations, elements, components, or combinations of the foregoing.

Furthermore, the terms "first", "second", "third", etc., are used only to differentiate the description, and are not to be understood as indicating or implying relative importance.

Unless otherwise defined, all terms (including technical terms and scientific terms) used herein have the same meaning as commonly understood by those of ordinary skill in the art to which the various embodiments of the present invention belong. The terms (such as those defined in dictionaries of general use) will be explained to have the same meaning as the contextual meaning in the relevant field of technology, and will not be explained to have an idealized meaning or an overly formalized meaning, unless clearly defined in various embodiments of the present invention.

### Embodiment 1

In the current industrial production, the welding defect detection mainly relies on the method of manual microscope check one by one, which not only limits the improvement of production efficiency, but also cannot ensure the accuracy and consistency of the test results.

In response to the above technical problems, the embodiment of the present invention provides a battery welding defect detection system for solving the technical problems of low efficiency, low accuracy, and high cost of the current battery welding defect detection.

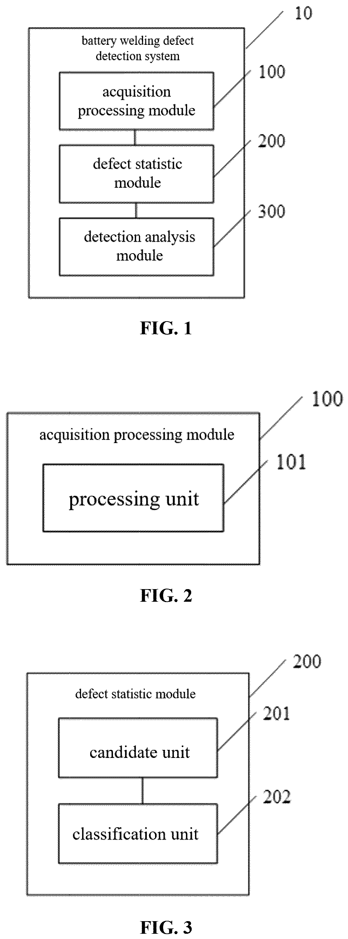

Referring to FIG. 1, FIG. 1 is a schematic structure diagram of the battery welding defect detection system provided by the present invention. The battery welding defect detection system 10 provided by the embodiment of the present invention includes: an acquisition processing module 100, a defect statistic module 200, and a detection analysis module 300. Each module is described below.

The acquisition processing module 100 is configured to acquire the welding image of the battery welding object and pre-process the welding image to obtain the processed welding image.

Specifically, the welding image of the battery welding object includes, but is not limited to, the welding image of the battery welding by a sealing nail. The embodiment preferably adopts a high-resolution 2.5D camera device to perform the image acquisition to the welding part of the battery, wherein the 2.5D camera device can capture rich depth information of the battery, and is applicable for welding defect detection (such as cracks and burst points). Furthermore, in order to obtain the high-quality welding image, the welding image acquisition device has the following functions, including an auto-focus function controlling a motor of the camera lens and adjusting a focal distance in real time to ensure a clear welding image, an automatic exposure function automatically adjusting the exposure time of the camera to ensure that the welding image is not too bright or too dark according to the light intensity of the shooting environment, and a photometric stereoscopic technology further improving the acquisition accuracy of depth information by shooting from multiple lighting angles, so as to detect the surface defect more accurately.

In the embodiment, the welding defect detection of the large square battery plays a bond role in connecting the manufacturing processes of the production of raw materials and complete batteries. Therefore, mainly for the large square battery, the pre-processing includes an image clipping operation, an image denoising operation, an image enhancement operation, and an image standardization operation, specifically including the following.

The image clipping operation is to clip the images to the same size by adopting a sliding window clipping algorithm, and at the same time to expand the dataset, so as to ensure that each image focuses on the part of the battery welding.

The image denoising operation is to remove noise and disturbances in the image by adopting the median filtering and Gaussian filtering algorithms, such as granular noise and highfrequency disturbances.

The image enhancement operation is to adjust the brightness, contrast, and color balance of the image to enhance the image visualization and edge information, so as to ensure that details of defects in the image can be better captured.

The image standardization operation is to ensure the consistency of data input to the deep learning model by adjusting the images to a uniform size and direction, thereby eliminating differences in brightness and color between different images.

In the embodiment, the battery welding part is photographed by using an industrial camera or other imaging devices, so as to obtain the welding image of the battery welding object with the sufficiently high resolution and sufficiently clear details; then the obtained welding image by acquiring is processed, e.g., when the original welding image is in color, the original welding image is converted to a grayscale image to simplify the subsequent processing steps; the noise in the welding image is removed by adopting the median filtering, Gaussian filtering, or other methods; the brightness, contrast, and color balance are adjusted, and the details of the welding image are enhanced by using techniques such as histogram equalization; and the welding image is clipped by using the sliding window algorithm and is focused on the battery welding region, and at the same time the dataset is enlarged. The welding image data can be beneficial to the subsequent analysis or the training of a learning model by the edge detection, contour extraction, and other processing method.

Specifically, referring to FIG. 2, in one realization method of the embodiment, the acquisition processing module 100 includes: a processing unit 101, configured to process the welding image by clipping, denoising, enhancement, and standardization by using the preset image processing algorithm, so as to obtain the processed welding image.

In the embodiment, the pre-processing is performed on the acquired welding image, and it includes, but is not limited to, the image clipping operation, the image denoising operation, the image enhancement operation, and the image standardization operation, so as to ensure that each welding image focuses on the battery welding region; and the noise and disturbances in the welding image are removed, so as to ensure that details of the defects in the welding image can be better captured, and the differences in brightness and color between different welding images can be eliminated.

Referring to FIG. 1, the battery welding defect detection system 10 further includes: a defect statistic module 200, configured to classify and count the processed welding image based on the target detection model to obtain the plurality of battery candidate frames.

Specifically, in the field of industrial automation and quality control, it can automatically learn to extract features from the welding image by constructing the target detection model, and recognize and classify various types of defects. It is an effective tool for detecting the surface defect of the product.

In the embodiment, the battery part in the welding image is localized and counted by a pre-constructed target detection model, wherein a large amount of candidate frames is generated in the welding image to cover all regions that can contain the battery welding; and then a reasonable amount and size of candidate frames are generated according to the size of the welding image and the typical size of the battery by adopting the sliding window strategy, so as to effectively detect the defects for the battery welding part, which avoids errors from the abnormal judgment.

Specifically, referring to FIG. 3, in one realization method of the embodiment, the defect statistic module 200 includes: a candidate unit 201, configured to generate a plurality of candidate frames of a corresponding number and size according to the processed welding image and a preset size by a sliding window strategy.

Specifically, the sliding window strategy is a target detection technique, which searches for potential target regions by moving windows of different sizes on the welding image. The size of the window to be used is determined according to the preset size first, wherein the window size can be a fixed size or a series of different sizes, which facilitates the detection to the targets with different scales; then a first window is placed to confirm the initialization window position starting from a corner (usually the upper-left corner) of the welding image; and then the window is moved horizontally or vertically on the welding image according to a preset stride to generate a plurality of candidate frames with the corresponding number and size, which is help for the subsequent model to specifically analyze the defect detection condition.

In the embodiment, the targets with different scales can be detected by the sliding window strategy according to the processed welding image and the preset size, so as to improve the comprehensiveness of detection; and then the plurality of candidate frames of the corresponding number and size are generated, so that the computational complexity can be reduced by intelligently filtering the candidate regions, and thus the computational efficiency is optimized.

The classification unit 202 is configured to classify each of the candidate frames by the target detection model, so as to obtain a plurality of types of candidate frames.

In the embodiment, all candidate frames are input into the target detection model, and the corresponding feature is extracted for each candidate frame, wherein the feature can be a color histogram, a gradient direction histogram, and deep learning features, etc. All candidate frames are summarized and sorted according to different features, and the candidate frame meeting the preset threshold is selected by non-maximal suppression (NMS), e.g., if the same target is detected in the plurality of adjacent candidate frame windows, the non-maximal suppression algorithm is used to remove repeated detection results, and the most likely candidate frames are remained, so as to obtain the plurality of types of candidate frames.

Referring to FIG. 1, the battery welding defect detection system 10 further includes: the detection analysis module 300, configured to obtain the corresponding battery detection result according to the preset threshold and the battery candidate frames by the target detection model.

In the embodiment, recognizing whether a defect exists in the welding image, the type of the defect, and the position information of the defect by the trained target detection model specifically includes: performing the defect detection on the acquired welding image by using the trained target detection model, so as to obtain the corresponding image feature; and then putting the image feature into the model for analysis, so as to obtain the battery detection result used for detection based on forward propagation of the preset function, including the defect type, the defect position, and the probability distribution of each defect, so that the problem of defect type detection and the problem of defect position estimation can be solved simultaneously.

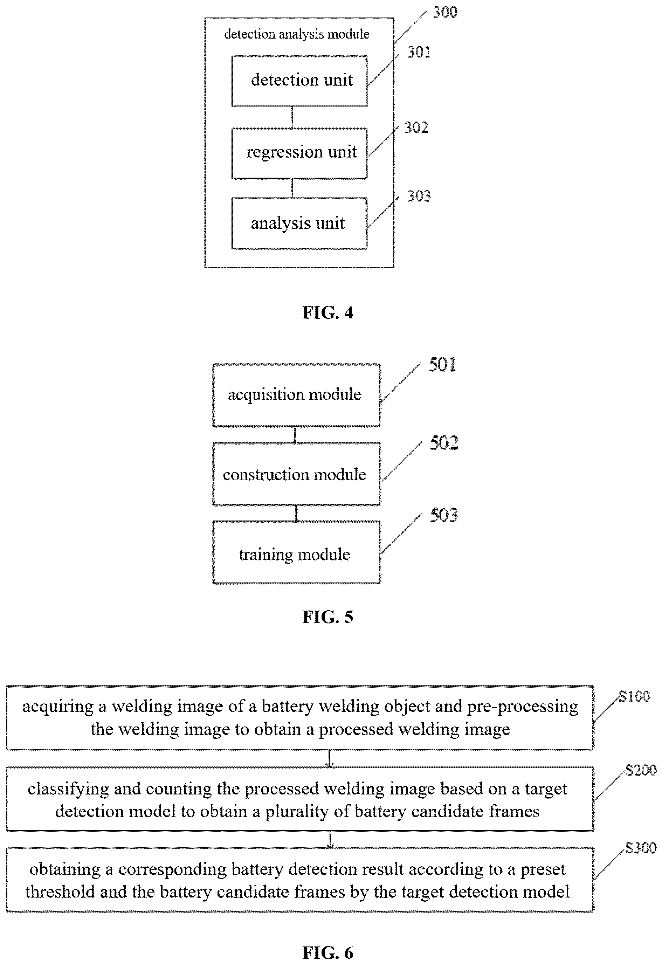

Specifically, referring to FIG. 4, in one realization method of the embodiment, the detection analysis module 300 includes: a detection unit 301, configured to detect each of the candidate frames by the target detection model to obtain the corresponding image feature, and to analyze the image feature to obtain the corresponding defect type and defect position.

Specifically, the image feature refers to the processed welding image extracted by using the deep learning model, including, but not limited to information such as edge, texture, and shape.

In the embodiment, the feature extraction is performed on the welding image region in each candidate frame by using the intermediate layer of the target detection model through the trained target detection model; the extracted image feature is put into the fully connected layer and processed by operations such as feature pooling, standardization, and nonlinear transformation, so as to enhance the differentiation and robustness of the feature; then the processed feature is recognized and classified to recognize specific types of defects (such as crack, scratch, and stain); the exact position of the defect in each candidate frame is predicted, and the positioning is refined by adjusting coordinates of the bounding box; and the detected defect type and defect position are finally obtained, which reduces the manual intervention, and improves the speed and accuracy of the detection.

A regression unit 302 is configured to perform a regression analysis according to the defect type and the defect position by the preset function, so as to obtain a corresponding defect probability distribution.

Specifically, the defect probability distribution refers to a probability distribution used to describe the amount of defects that may be occurred in the detected battery, so as to predict and understand the defect rate in the production process for improvement and optimization.

In the embodiment, performing the regression analysis according to the defect type and the defect position by the preset function to obtain the corresponding defect probability distribution is preferably as connecting the deep learning model output layer to a softmax function, converting the model output to probability distributions of various types of defects by the standardization model, and outputting them, so that the output of the model is more intuitive and easy to understand and interpret.

An analysis unit 303 is configured to analyze all candidate frames based on the preset threshold and the defect probability distribution, so as to obtain the battery detection result.

Specifically, the preset threshold is used to determine a credibility of the result of the target detection model. For example, for each candidate frame, the model gives a confidence score indicating the possibility of the corresponding candidate frame belonging to a certain type.

In the embodiment, for the defect probability distribution of each candidate frame, the probability scores corresponding to different types are calculated according to the defect probability distribution, and the probability score of each candidate frame is compared with the preset threshold. When the score of the candidate frame is higher than the preset threshold, the corresponding candidate frame is considered to be a valid detection result, or vice versa, the currently calculated candidate frame is ignored. For the valid candidate frames of the welding images of the currently detected battery, the type with the highest score is selected as the detection status of the battery welding image. For example, if all valid candidate frames in the battery welding image have the highest score when being in the "damaged sealing nail" type, the detection status of the corresponding battery welding image is the damaged sealing nail, and the battery welding part is also in a damaged status, so that the battery detection result is formed based on the preset threshold and the defect probability distribution, including the detection status, the defect type, the defect position, and the defect probability distribution of the welding part in the battery welding image.

Referring to FIG. 5, the battery welding defect detection system 10 provided by the embodiment of the present invention further includes: an acquiring module 501, a construction module 502, and a training module 503. Each module is described below.

The acquiring module 501 is configured to acquire a battery welding image training set for training, a battery welding image verification set, and a battery welding image test set.

In the embodiment, a large amount of welding image data of the battery welding object is collected, and the type, position, and bounding box of each welding defect is pre-labeled, so as to form the battery welding image training set, the battery welding image verification set, and the battery welding image test set, which are used for training, validation, and testing of the model respectively.

The construction module 502 is configured to construct an initial target detection model according to the welding image training set based on the preset deep learning model.

In the embodiment, a model architecture suitable for welding image classification and the defect detection is first selected for constructing the target detection model, wherein a YOLOv8 (ultralytics YOLOv8) model is preferred as the base model, and the initial target detection model is constructed for receiving the input welding image and has a plurality of output layers. One output layer is used to recognize different defect types, and the other output layer is used to predict the specific position of the defect. The initial target detection model and the parameters are then improved specifically, especially by adding adaptive enhancement modules for recognizing the reflection points and cracks, and adding the medium target output layer. Meanwhile, the feature extraction and prediction module of the network is optimized, so as to improve the detection efficiency and accuracy. It includes: removing the reflective point, e.g., the high-light reflective areas in the welding image are effectively removed by the adaptive filtering technique; and detecting the high resolution feature and fine texture information required by the fine crack. For example, the detailed information is captured by the high resolution network structure and the Attention mechanism, so as to improve the accuracy for recognizing the fine object, especially in the detection of small objects and fine cracks. The medium target output layer is added, and the feature extraction and prediction module of the network is optimized at the same time. For example, the high-resolution feature extraction module of HRNet is introduced for capturing more detailed information; the medium-target output layer is added; one output layer is added into the network structure to enhance the detection capability for the medium target; the Attention mechanism is introduced; the SE (squeeze-and-excitation) block is embedded in the feature maps of YOLOv8 to improve the feature weight of the specific areas; the hyperparameters, such as the learning rate, the batch size, and the amount of network layers are set; and experiments and validations are performed multiple times, so as to improve the performance and generalization capability of the model by optimizing these parameters.

A training module 503 is configured to train the initial target detection model according to the welding image verification set and the welding image test set, so as to obtain the target detection model.

In the embodiment, the model is trained by using the welding image verification set and the welding image test set, and the parameters are optimized by using the backpropagation and stochastic gradient descent (SGD) algorithm to minimize the loss function. The specific steps of the parameter optimization are observing the results of different image enhancement methods, learning rates, and optimizers by comparing the results of a large amount of experiments on the database, and migrating to a large dataset to obtain the optimal model. The loss function specifically includes: 1, bounding box regression loss: calculating differences between the predicted bounding box and the real bounding box by using GIoU (generalized IoU); 2, classification loss: calculating differences between the predicted type and the real type by using the cross-entropy loss; and 3, confidence loss: assessing differences between the confidence level of the predicted object and that of the object actually existing by using the binary cross-entropy loss. Finally, the robustness and accuracy of the model are further improved by using the data augmentation and cross validation techniques.

In the embodiment, by using the plurality of battery welding image datasets, the subsequently constructed model is trained; the model parameters are adjusted to optimize the performance; and the performance of the model on unseen data is evaluated, so as to ensure its generalization. The initial target detection model is constructed according to the welding image training set based on the YOLOv8 model, and then the initial target detection model is trained according to the welding image verification set and the welding image test set. The initial target detection model automatically extracts features that help to distinguish between different features of defect types from the welding image verification set and the welding image test set; the initial target detection model predicts whether or not there is defect in the welding image and the specific type of the defect based on the extracted features; and then the confidence level of the model detection result is confirmed according to the welding image verification set and the welding image test set, so as to obtain the target detection model for detecting defects of the subsequent battery welding image. Additionally, it improves the detection capability of the target detection model for the reflective blowout points and small cracks by constructing the target detection model based on the deep learning model. The automation is realized and the detection of the battery welding defect is efficiently completed, which not only improves the detection speed, but also improves the detection accuracy, so as to significantly improve the production efficiency.

The battery welding defect detection system 10 provided by the embodiment of the present invention further includes: a result output module, configured to display the corresponding defect information according to the defect type, the defect position, and the battery detection result.

In the embodiment, the battery detection results, including the detection status, the defect type, the defect position, and the defect probability distribution of the welding image of the battery welding object, are output and displayed on the user interface, so as to provide the real-time detection information. For example, the amount and the types of the battery defects are clearly displayed in numerical form to visually show the detection results; the defect information is overlapped on the battery welding image by using an image processing software or a professional tool; the detected welding defect position is labeled on the welding image; and the detailed defect type, the defect number, and the confidence level information are displayed, so that operator can quickly assess the quality of the battery according to the types and severity of defects, so as to adjust the production process or the device parameters, and help to predict the potential problem and optimize the production strategy.

The battery welding defect detection system 10 provided by the embodiment of the present invention further includes: a data update module, configured to bind the battery detection result to cell data of a corresponding battery and update to a preset database.

In the embodiment, the preset database is preferably a local database or a cloud server database. The battery detection results are bound to the specific cell data through the two-dimensional code on the surface of the battery recognizing the corresponding data, and it is stored in the preset database; at the same time, it is uploaded to the MES (manufacturing execution system), so as to realize the traceability of the data; then the two-dimensional code on the surface of the battery is recognized quickly and accurately by using a highly efficient code scanning device, so as to obtain a sole identification of the battery; then the detection result is bound to the identification of the battery, and is stored in the local database, which facilitates the subsequent query and trace; and finally, the detection data is uploaded to the MES in real time, so as to ensure that the automatic processing of the subsequent steps of the production line can obtain the latest detection result and the trace information in real time.

The embodiment discloses a battery welding defect detection system, and the system includes: an acquisition processing module, configured to acquire the welding image of the battery welding object and pre-process the welding image to obtain the processed welding image; a defect statistic module, configured to classify and count the processed welding image based on the target detection model to obtain the plurality of battery candidate frames; and a detection analysis module, configured to obtain the corresponding battery detection result according to the preset threshold and the battery candidate frames by the target detection model. The present invention performs the defect defection on the processed battery welding image based on the target detection model, thereby significantly improving the detection efficiency and the accuracy of the results, and at the same time effectively reducing the production cost.

### Embodiment 2

The embodiment of the present invention provides a battery welding defect detection method, applied to the battery welding defect detection system provided by Embodiment 1.

As shown in FIG. 6, FIG. 6 shows a schematic flow diagram of the battery welding defect detection method. The battery welding defect detection method includes:
Step S 100, acquiring the welding image of the battery welding object and pre-processing the welding image to obtain the processed welding image;
Step S200, classifying and counting the processed welding image based on the target detection model to obtain the plurality of battery candidate frames; and
Step S300, obtaining the corresponding battery detection result according to the preset threshold and the battery candidate frames by the target detection model.

The battery welding defect detection method provided by the embodiment is applied to the battery welding defect detection system provided by Embodiment 1, which can realize the corresponding functions of the battery welding defect detection system and achieve the corresponding effects, which will not be repeated herein to avoid repetition.

In summary, the present invention further provides a battery welding defect detection method. The method includes: acquiring the welding image of the battery welding object and pre-processing the welding image to obtain the processed welding image; classifying and counting the processed welding image based on the target detection model to obtain the plurality of battery candidate frames; and obtaining the corresponding battery detection result according to the preset threshold and the battery candidate frames by the target detection model. The present invention performs the defect defection on the processed battery welding image based on the target detection model, thereby significantly improving the detection efficiency and the accuracy of the results, and at the same time effectively reducing the production cost.

### Embodiment 3

Additionally, the present invention provides an electronic device including a memory and a processor, wherein the memory stores a computer program, and the computer program executes the battery welding defect detection method provided by Embodiment 2 when running on the processor.

The electronic device provided in the embodiment can realize the battery welding defect detection method provided by Embodiment 2, which will not be repeated herein to avoid repetition.

### Embodiment 4

The present invention further provides a computer readable storage medium, and the computer readable storage medium stores a computer program, wherein the battery welding defect detection method provided by Embodiment 2 is realized when the computer program is executed by the processor.

In the embodiment, the computer readable storage medium can be a read-only memory (ROM), a random access memory (RAM), a disk, or a CD-ROM, etc.

The computer readable storage medium provided by the embodiment can realize the battery welding defect detection method provided by Embodiment 2, which will not be repeated herein to avoid repetition.

In the embodiments provided by the present invention, it should be understood that the disclosed device and method may also be realized in other ways. The embodiments of the device described above are only illustrative, for example, the division of the units is only a logical functional division, and it can be divided in another way when actually realized, or for example, multiple units or components can be combined or can be integrated into another system, or some features can be ignored, or not be executed. Additionally, the mutual coupling or direct coupling or communication connection shown or discussed can be an indirect coupling or communication connection via some communication interfaces, devices, or units, which can be electrical, mechanical, or other forms.

Moreover, the unit illustrated as a separated component can or cannot be physically separated, and the components shown as a unit can or cannot be a physical unit, i.e., it can be located on a single place, or it can be distributed on a plurality of network units. Some or all of these units can be selected to fulfill the purpose of the solution of the embodiment according to actual needs.

Further, the various functional modules in various embodiments of the present invention can be integrated together to form a separate part, individual modules can exist alone, or two or more modules that can be integrated to form a separate part.

It should be noted that if realized in the form of a software functional module and sold or used as an individual product, the function can be stored in a computer readable storage medium. Based on this understanding, the technical solution of the present invention in essential, the part contributing to the prior art, or the part of the technical solutions can be embodied in the form of the software product. The computer software product is stored in a storage medium, including several instructions to cause a computer device (which may be a personal computer, a server, or a network device, etc.) to perform all or part of the steps of the method described in each embodiment of the present invention. The foregoing storage medium includes: U disk, portable hard disk, read-only memory (ROM), random access memory (RAM), disk, disc, or other medium that can store the program code.

In the text, relational terms such as "first", and "second", etc., in the description of the present invention are only used to distinguish one entity or operation from another entity or operation, and do not necessarily require or imply the existence of any such actual relationship or order between these entities or operations.

The foregoing are merely embodiments of the present invention, and are not used to limit the scope of the protection of the present invention. For those skilled in the art, the present invention may have various changes and variations. Any modifications, equivalent replacements, improvements, etc., made within the spirit and principles of the present invention, shall be included within the scope of protection of the present invention.

## Claims

1. A battery welding defect detection system (10), **characterized by** comprising:
an acquisition processing module (100), configured to acquire a welding image of a battery welding object and pre-process the welding image to obtain a processed welding image;
a defect statistic module (200), configured to classify and count the processed welding image based on a target detection model to obtain a plurality of battery candidate frames; and
a detection analysis module (300), configured to obtain a corresponding battery detection result according to a preset threshold and the battery candidate frames by the target detection model.

2. The battery welding defect detection system (10) according to claim 1, further comprising:
an acquiring module (501), configured to acquire a battery welding image training set for training, a battery welding image verification set, and a battery welding image test set;
a construction module (502), configured to construct an initial target detection model according to the welding image training set based on a preset deep learning model; and
a training module (503), configured to train the initial target detection model according to the welding image verification set and the welding image test set, so as to obtain the target detection model.

3. The battery welding defect detection system (10) according to claim 2, wherein the acquisition processing module (100) comprises:
a processing unit (101), configured to process the welding image by clipping, denoising, enhancement, and standardization by using a preset image processing algorithm, so as to obtain the processed welding image.

4. The battery welding defect detection system (10) according to claim 2, wherein the defect statistic module (200) comprises:
a candidate unit (201), configured to generate the plurality of candidate frames of a corresponding number and size according to the processed welding image and a preset size by a sliding window strategy; and
a classification unit (202), configured to classify each of the candidate frames by the target detection model, so as to obtain a plurality of types of candidate frames.

5. The battery welding defect detection system (10) according to claim 2, wherein the detection analysis module (300) comprises:
a detection unit (301), configured to detect each of the candidate frames by the target detection model to obtain a corresponding image feature, and to analyze the image feature to obtain a corresponding defect type and a defect position;
a regression unit (302), configured to perform a regression analysis according to the defect type and the defect position by a preset function, so as to obtain a corresponding defect probability distribution; and
an analysis unit (303), configured to analyze all of the candidate frames based on the preset threshold and the defect probability distribution, so as to obtain the battery detection result.

6. The battery welding defect detection system (10) according to claim 5, further comprising:
a result output module, configured to display corresponding defect information according to the defect type, the defect position, and the battery detection result.

7. The battery welding defect detection system (10) according to claim 1, further comprising:
a data update module, configured to bind the battery detection result to cell data of a corresponding battery and update to a preset database.

8. A battery welding defect detection method, **characterized by** comprising:
acquiring a welding image of a battery welding object and pre-processing the welding image to obtain a processed welding image;
classifying and counting the processed welding image based on a target detection model to obtain a plurality of battery candidate frames; and
obtaining a corresponding battery detection result according to a preset threshold and the battery candidate frames by the target detection model.

9. An electronic device, **characterized by** comprising a memory, a processor, and a computer program stored in the memory and operable in the processor, wherein the battery welding defect detection method according to claim 8 is realized when the processor executes the computer program.

10. A computer readable storage medium, **characterized in that** the computer readable storage medium stores a computer program, and the battery welding defect detection method according to claim 8 is executed when the computer program is executed by a processor.
